# EUROPEAN PATENT SPECIFICATION

(11) **EP 2 007 006 B1**
(45) Date of publication and mention of the grant of the patent: **02.07.2014**
(21) Application number: 07740868.0
(22) Date of filing: 03.04.2007
(51) Int. Cl.: H02P 27/06, F24F 11/02, H02P 27/08, H02P 29/00, H02M 1/42

(54) **INVERTER DEVICE AND AIR CONDITIONER**
UMRICHTER UND KLIMAANLAGE
DISPOSITIF D'ONDULEUR ET CONDITIONNEUR D'AIR

(30) Priority: 03.04.2006 JP 2006101768
(43) Date of publication of application: 24.12.2008
(73) Proprietor: Panasonic Corporation, Kadoma-shi Osaka 571-8501 (JP)
(72) Inventor: FUKUE, Takashi, Chuo-ku, Osaka 540-6207 (JP); MATSUSHIRO, Hideo, Chuo-ku, Osaka 540-6207 (JP); OGAWA, Masanori, Chuo-ku, Osaka 540-6207 (JP)
(74) Representative: Eisenführ Speiser
(86) International application number: PCT/JP2007/057432
(87) International publication number: WO 2007/116873

(56) References cited:
- EP-A1- 1 396 927
- EP-A2- 1 603 226
- WO-A1-03/041260
- JP-A- 06 197 549
- JP-A- 2000 350 489
- JP-A- 2004 320 985
- JP-A- 2005 143 291
- JP-A- 2005 224 038
- JP-A- 2006 203 963
- US-A1- 2004 232 877

## Description

### FIELD OF THE INVENTION

The present invention relates to technology for reducing distortion in an inverter, and relates more particularly to an inverter device and an air conditioner.

### BACKGROUND OF THE INVENTION

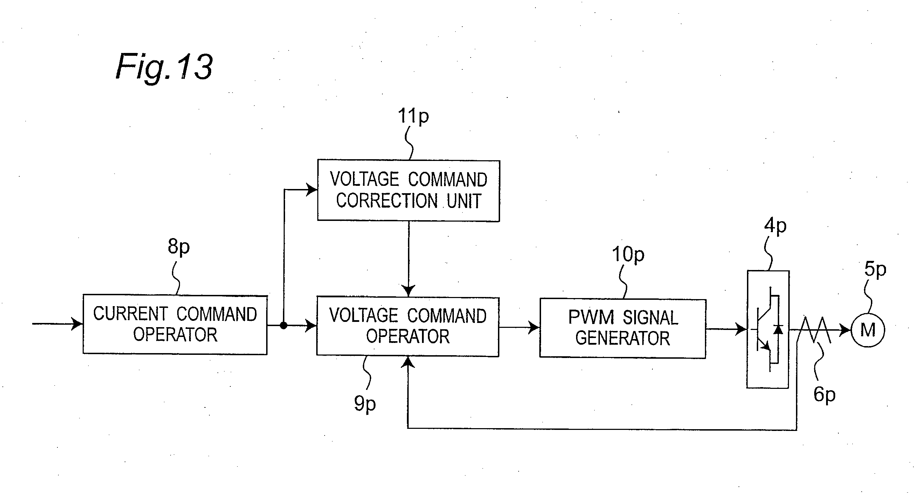

FIG. 13 shows an inverter device that reduces distortion in the alternating current flowing from the AC power supply that drives a motor as described in Japanese Laid-open Patent Publication No. H9-84385.

As shown in FIG. 13, this conventional inverter device has a DC/AC converter 4p, a current detector 6p, a current command operator 8p, a voltage command operator 9p, a PWM signal generator 10p, and a voltage command compensation unit 11p. The DC/AC converter 4p converts the output voltage of a smoothing unit (not shown in the figure) to a desired AC voltage to drive the motor 5p. The current detector 6p detects the current flowing to the motor 5p. The current command operator 8p computes the current control value for driving the motor 5p. The voltage command operator 9p computes the voltage control value based on the calculated current control value and the current detected by the current detector 6p. The PWM signal generator 10p then generates the signal for driving the DC/AC converter 4p from the voltage control value. The voltage command compensation unit 11p superimposes a compensation signal on the voltage control value.

Distortion is thus generally reduced by correcting the amplitude of the voltage control value based on the current control value.

Recent inverter devices, however, strive to reduce cost, size, and weight by significantly reducing the capacitance and scale of the capacitors and reactances used in the smoothing unit.

However, if a smoothing unit with insufficient capacitance is used, the output voltage of the smoothing unit pulsates greatly at twice the frequency of the AC supply frequency. In this case the inverter device that uses a voltage command compensation unit 11p according to the related art is affected by the voltage pulsation and cannot sufficiently suppress current distortion in the motor 5p.

EP 1 603 226 A2 discloses an electric motor car controller, which comprises a voltage detector for detecting the voltage across a filter capacitor, an energy amount calculator for calculating the amount of energy of the filter capacitor from the output from the voltage detector, a band-frequency component detector for extracting the given band-frequency component included in the amount of energy, a band-frequency component coefficient unit for multiplying the band-frequency component by a given coefficient and outputting a q-axis current command correcting value, and a q-axis current command correcting value adder for adding a q-axis current command correcting value to the q-axis current command value to correct the q-axis current command value.

EP 1 396 927 A1 discloses an inverter controlling apparatus comprising a conventional condenser-less inverter controlling section for outputting a provisional torque command or current for torque commend for controlling a conventional condenser-less inverter an operation section for receiving a motor torque, a motor rotational speed, a power voltage, and a coefficient as inputs, for calculating a power current and for outputting the power current as a power current command value, a feedback operation section for receiving the power current command value and the real current as inputs, for carrying out an operation so as to make the deviation between the both to be 0.

US 2004/0232877 A1 discloses a reactor having a predetermined small capacity, which is connected to a rectifier, and a capacitor having a predetermined small capacity, which is connected between DC bus lines of an inverter. A PN voltage corrector calculates a ratio of the DC voltage detection value of the inverter obtained by the PN voltage detector to a predetermined DC voltage reference value of the inverter to thereby generate a PN voltage correction factor. A beat amount corrector calculates a fluctuation amount of the motor current from the motor current detection value obtained by the motor current detector and generates a reverse phase component of the motor current fluctuation amount.

### DISCLOSURE OF THE INVENTION

An inverter device and an air conditioner according to the present invention suppress waveform distortion in the motor while using a smoothing unit from which the output voltage pulsates greatly.

An inverter device according to a first aspect of the invention has a rectification means that rectifies an AC voltage from an AC power supply and generates a rectified voltage; a smoothing means that smoothes the rectified voltage and generates a smooth voltage containing the waveform of a smooth voltage period corresponding to half the AC voltage period; a DC/AC conversion means that converts the smooth voltage to a drive voltage representing a pulse-width modulated alternating voltage, and supplies the drive voltage to a motor; a current detection means that detects the motor current flowing to the motor as a result of the drive voltage, containing the waveform of the smooth voltage period and waveform distortion, and generates a current detection signal; a target speed setting means that generates a target speed signal representing the target speed of the motor; a voltage command output means that generates and outputs a voltage command signal representing the control level of the to-be-modulated signal for pulse width modulation based on the current detection signal and target speed signal; a voltage command correction means that generates a voltage command correction signal for correcting waveform distortion based on the current detection signal and target speed signal; a to-be-modulated signal generating means that adds the voltage command signal and the voltage command correction signal, and generates the resulting sum signal as the to-be-modulated signal; and a pulse width modulation signal generating means that generates the pulse width modulation signal based on the to-be-modulated signal. The DC/AC conversion means generates the drive voltage based on the pulse width modulation signal. The voltage command output means includes a rotational phase detection means that detects a rotational phase signal representing the rotational phase of the motor based on the current detection signal, a current command generating means that generates a current command signal representing the motor current control value based on the rotational phase signal and the target speed signal, and a voltage command generating means that generates a voltage command signal based on the rotational phase signal and current command signal; and said voltage command correction means generates the voltage command correction signal based on the rotational phase signal and the current command signal.

An air conditioner according to another aspect of the invention has the inverter device described above and a compressor including a motor.

By reducing the power supply harmonics in the alternating current flowing through the AC supply and preventing contamination of the commercial power supply, power supply efficiency is improved not only in the inverter device but also in other electrical devices connected to the same power supply system.

Furthermore, because the physical size of the smoothing capacitor can be reduced, the inverter device can also be reduced in size and weight, and the size and weight of the air conditioner in which the inverter device is used can also be easily reduced. The cost of the inverter device and air conditioner can also be reduced by making the smoothing capacitor, inverter device, and air conditioner smaller. Eliminating the need for a power factor control circuit also contributes to reducing the cost of the inverter device and air conditioner.

The inverter device of the invention is not limited to use in air conditioners, and can be used in any electrical device that uses an inverter device.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of an inverter device according to a first embodiment of the invention.
FIG. 2 is a waveform chart of the main signals in the inverter device according to the first embodiment of the invention.
FIG. 3 is a waveform chart of the main signals in the inverter device according to the first embodiment of the invention.
FIG. 4A is a detailed block diagram of the voltage command generating unit in the inverter device according to the first embodiment of the invention.
FIG. 4B is a detailed block diagram of the voltage command correction unit in the inverter device according to the first embodiment of the invention.
FIG. 5 is a waveform chart describing the operation of the voltage command correction unit in the inverter device according to the first embodiment of the invention.
FIG. 6 is a waveform chart of the main signals in the inverter device according to the first embodiment of the invention.
FIG. 7A is a block diagram of an inverter device according to a second embodiment of the invention.
FIG. 7B is a detailed block diagram of one version of the voltage command correction unit in the inverter device according to the second embodiment of the invention.
FIG. 7C is a detailed block diagram of another version of the voltage command correction unit in the inverter device according to the second embodiment of the invention.
FIG. 8 is a waveform chart of the main signals in the inverter device according to the second embodiment of the invention.
FIG. 9 is a waveform chart of the main signals in the inverter device according to the second embodiment of the invention.
FIG. 10 is a waveform chart of the main signals in the inverter device according to the second embodiment of the invention.
FIG. 11 is a waveform chart of the main signals in the inverter device according to the second embodiment of the invention.
FIG. 12 is a waveform chart of the main signals in the inverter device according to the second embodiment of the invention.
FIG. 13 is a block diagram of an inverter device according to the related art.

### KEY TO THE FIGURES

- 1: AC power supply
- 2: rectification unit
- 3: smoothing unit
- 4: DC/AC converter
- 5: motor
- 6: current detector
- 7: rotational phase detection unit
- 8: current command generating unit
- 9: voltage command generating unit
- 10: PWM signal generator
- 11: voltage command correction unit
- 12: voltage phase detection unit
- 15: target speed setting unit
- 16: adder
- 18: current sensor

### DETAILED DESCRIPTION OF THE PREFERRED EMBODIMENTS

Some preferred embodiments of the invention are described below with reference to the accompanying figures wherein parts having the same arrangement, operation, and effect are denoted by the same reference numbers. Numbers used in the following description are by way of example only to describe the invention clearly, and the invention is not limited to these numbers in any way. Logic levels expressed as high and low, and switching states expressed as on and off, are also used by way of example only to describe a specific embodiment of the invention, and it will be obvious that the same effect can be achieved using different combinations of logic levels and switching states. Connections between specific elements and components are also shown by way of example only, and the connections achieving the function of the invention are not so limited. The following embodiments are also rendered using hardware and/or software components, but the hardware configurations can be achieved using software and the software configurations can be achieved using hardware,

### Embodiment 1

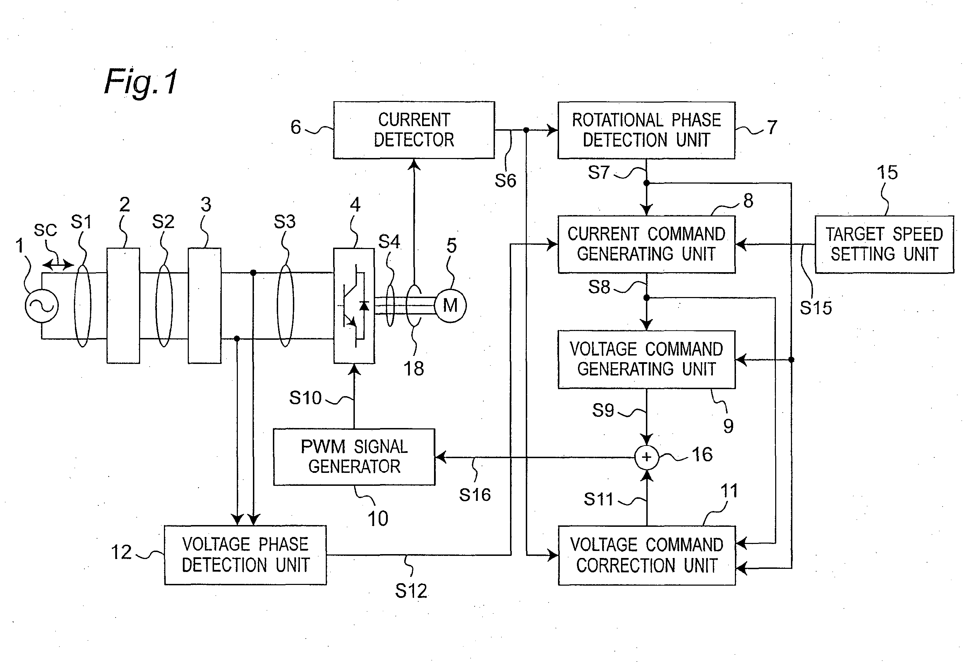

FIG. 1 is a block diagram showing an inverter device according to a first embodiment of the invention.

Referring to FIG. 1, the inverter device according to this first embodiment of the invention produces a drive voltage S4 by rectifying the single-phase AC voltage S1 from the AC power supply 1 and then alternating the output by means of pulse width modulation (PWM). The inverter device supplies this drive voltage S4 to the motor 5 to drive the motor 5. When the motor 5 turns, coolant is compressed in the compressor of the air conditioner. The inverter device according to this first embodiment of the invention includes a rectification unit 2, a smoothing unit 3, a DC/AC converter 4, a current detector 6, a rotational phase detection unit 7, a target speed setting unit 15, a current command generating unit 8, a voltage command generating unit 9, a voltage command correction unit 11, a voltage phase detection unit 12, an adder 16, and a PWM signal generator 10, The rotational phase detection unit 7, current command generating unit 8, and voltage command generating unit 9 render a voltage command output unit.

The rectification unit 2 is rendered by a diode bridge to which the AC voltage S1 from the AC power supply 1 is input. An AC current SC thus flows to the AC power supply 1. The rectification unit 2 full-wave rectifies the AC voltage S1 and outputs rectified voltage 52. The smoothing unit 3 is rendered by a smoothing capacitor (not shown in the figure) that is parallel connected to the rectified voltage S2, and a reactor (not shown in the figure) that is connected in series. The smoothing unit 3 smoothes the rectified voltage S2, and outputs a smooth voltage S3 that pulsates greatly at a frequency of twice the AC voltage S1. The period of this smooth voltage S3 at twice the frequency of the AC voltage S1 is called the smooth voltage period, which is half the AC voltage period. The DC/AC converter 4 is rendered by a semiconductor switching device, and converts the smooth voltage S3 to the drive voltage S4, which represents a PWM alternating voltage. The voltage phase detection unit 12 detects the voltage phase signal S12, which represents the phase of the smooth voltage S3.

The current detector 6 detects the motor current flowing to the motor 5 based on the drive voltage S4, and outputs a current detection signal S6. The current detection signal S6 has a waveform of the smooth voltage period, and includes waveform distortion.

The rotational phase detection unit 7 outputs a rotational phase signal S7 denoting the phase of motor 5 rotation based on the current detection signal S6.

The target speed setting unit 15 generates a target speed signal S15 denoting the target speed of the motor 5.

Based on the rotational phase signal S7, the voltage phase signal S12, and the target speed signal S15, the current command generating unit 8 generates a current command signal S8 representing the motor current control value.

Based on the rotational phase signal S7 and current command signal S8, the voltage command generating unit 9 generates a voltage command signal S9 denoting the control value of the unmodulated signal before pulse width modulation.

Based on the current detection signal S6, the rotational phase signal S7, and the current command signal S8, the voltage command correction unit 11 generates a voltage command correction signal S11 that corrects the waveform distortion of the current detection signal S6.

The adder 16 adds the voltage command signal S9 and the voltage command correction signal S11, and outputs sum signal S16. The adder 16 is also called a to-be-modulated signal generating unit, and the sum signal S16 is also called a to-be-modulated signal (that is, the signal to be modulated or a baseband signal).

The PWM signal generator 10 pulse width modulates the sum signal S16 as the to-be-modulated signal to be modulated using a sawtooth carrier wave signal of several kilohertz to several ten kilohertz, and outputs a PWM signal S10 with a PWM waveform.

Based on this PWM signal S10, the DC/AC converter 4 switches the smooth voltage S3 and generates the drive voltage S4.

The motor current is the current flowing between the DC/AC converter 4 and motor 5, and when the motor 5 uses a wye connection matches the phase current of the motor 5. In a typical embodiment the current detector 6 directly detects the motor current using a current sensor 18. Alternatively, the current detector 6 indirectly detects the estimated motor current from the bus current of the DC/AC converter 4, that is, from at least one of the two DC/AC converter 4 terminals to which the smooth voltage S3 is applied.

The reactor of the smoothing unit 3 is used to reduce the peak of the sudden charge current applied to the smoothing capacitor when the AC voltage S1 turns on. The reactor is located between the AC power supply 1 and the smoothing capacitor of the smoothing unit 3, but could be provided on the AC power supply 1 side or the smoothing unit 3 side of the rectification unit 2.

The reactance L1 of the reactor in the smoothing unit 3 and the capacitance C1 of the smoothing capacitor are set so that the resonance frequency fc = 1/(2π x (L1 x C1)^1/2) is at least 40 times the frequency of the AC power supply 1. In the first embodiment of the invention the frequency of the AC power supply 1 is 50 Hz. Therefore, if the reactance L1 = 0.5 mH and the capacitance C1 = 10 µF, the resonance frequency fc (=2250 Hz) > 40 x 50 Hz (= 2000 Hz), and is at least 40 times the frequency of the AC power supply 1. By thus setting the resonance frequency fc to 40 or more times the frequency of the AC power supply 1, a smaller and lighter reactor and smoothing capacitor can be used, and the cost can be reduced. This also eliminates the need for a power factor correction (PFC) circuit to handle the resonance frequency, and thus helps to further reduce cost.

The smoothing capacitor is typically a film capacitor.

The operation of the inverter device according to this embodiment of the invention is described next.

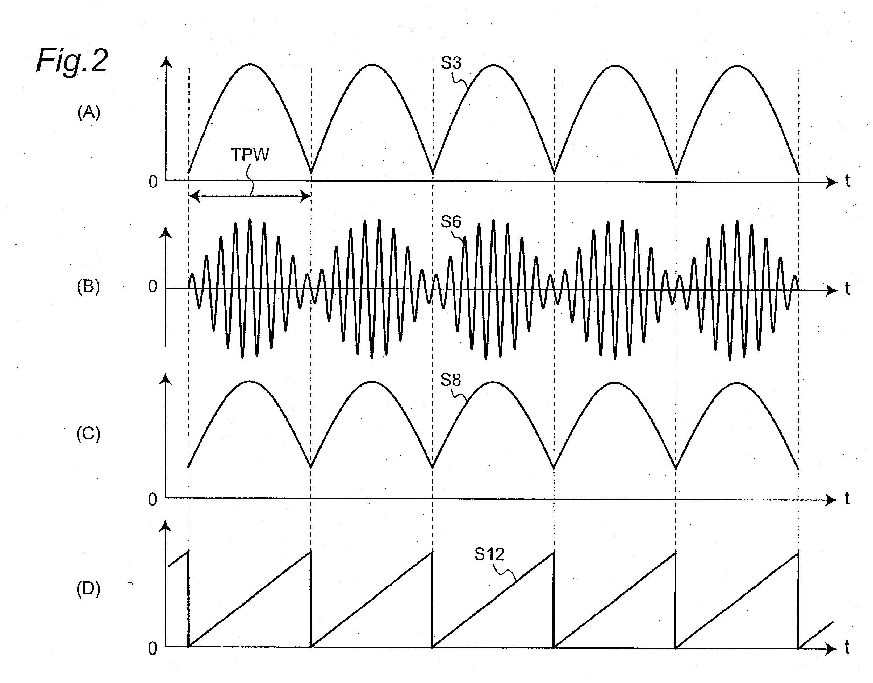

FIG. 2 is a waveform chart of the main signals referenced to time t. FIG. 2 (A) shows the waveform of the smooth voltage S3. By greatly decreasing the capacitance of the smoothing capacitor of the smoothing unit 3, the smooth voltage S3 pulsates greatly at a frequency of twice the power supply frequency (the "smooth voltage frequency" below) and an amplitude with a ripple factor of 80% or more. The inverse of the smooth voltage frequency is called the smooth voltage period TPW (see FIG. 2 (A)). In this first embodiment of the invention the smooth voltage period TPW is 10 ms.

FIG. 2 (B) shows the waveform of the current detection signal S6. The current detection signal S6 is the carrier wave signal after amplitude modulation using the to-be-modulated signal indicated by the envelope curve. In this case the carrier wave signal is a sine wave that contains waveform distortion and has an electrical angle frequency equal to the product of the motor speed times the number of polar pairs (half the number of poles) in the motor 5. The to-be-modulated signal is substantially identical to the smooth voltage S3. The current detection signal S6 is not a communication signal but for convenience of description is described with modulation terminology.

For example, if the motor 5 has 3 pole pairs and runs at 3500 rpm, the electrical angle frequency of the current detection signal S6 is 3 x 3500 (rpm)/60 (s) = 175 (Hz). The inverse of the electrical angle frequency is called the electrical angle period. In this example the electrical angle period is approximately 5.7 (msec).
FIG. 2 (D) shows the waveform of the voltage phase signal S12. The voltage phase signal S12 is a sawtooth wave that goes from 0° to 360° during the smooth voltage period TPW.

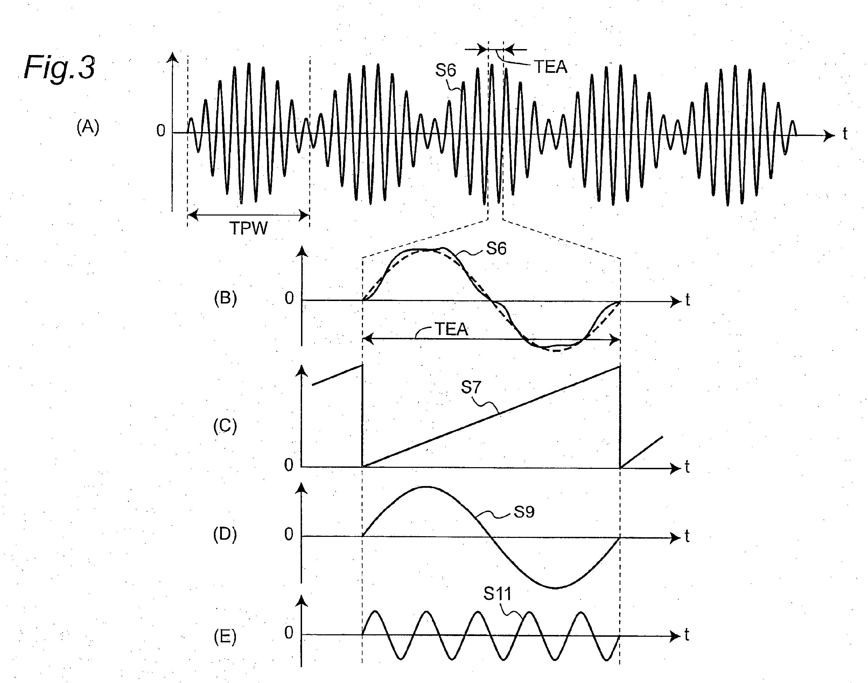

FIG. 3 is a waveform chart of the main signals referenced to time t. FIG. 3 (A) shows the same current detection signal S6 shown in FIG. 2 (8). FIG. 3 (B) shows the current detection signal S6 in FIG. 3 (A) while expanding the time base of the electrical angle period TEA of the current detection signal S6. The current detection signal S6 contains waveform distortion known as current distortion, and deviates slightly from the distortion-free waveform indicated by the dotted line.

FIG. 3 (C) to (E) also use the same expanded time base as used in (B). FIG. 3 (C) shows the waveform of the rotational phase signal S7. The rotational phase signal S7 is a sawtooth wave that goes from 0° to 360° during the electrical angle period TEA.

The current command generating unit 8 generates a current command signal S8 (shown in FIG. 2 (C)) in which the top half portion of a sine wave repeats each smooth voltage period TPW represented by the voltage phase signal S12, The amplitude of the current command signal S8 is controlled by comparing the actual speed acquired from the rotational phase signal S7 and the target speed represented by the target speed signal S15 so that the difference between said actual speed and said target speed decreases. More specifically, the amplitude of the current command signal S8 is increased if the actual speed is less than the target speed, and the amplitude of the current command signal S8 is decreased if the actual speed is greater than the target speed. In order to determine the actual speed, the current command generating unit 8 detects only the timing of each electrical angle period TEA of the rotational phase signal S7 and does not detect the waveform distortion of the current detection signal S6 contained in the rotational phase signal S7. As a result, the current command generating unit 8 does not impose the waveform distortion of the rotational phase signal S7 on the current command signal S8. In addition to the rotational phase signal S7, the current command generating unit 8 generates the current command signal S8 based on the voltage phase signal S12 and the target speed signal S15 containing no waveform distortion. As a result, the current command signal S8 does not contain the waveform distortion of the current detection signal S6.

The configuration and operation of the voltage command generating unit 9 in the first embodiment of the invention is described next.

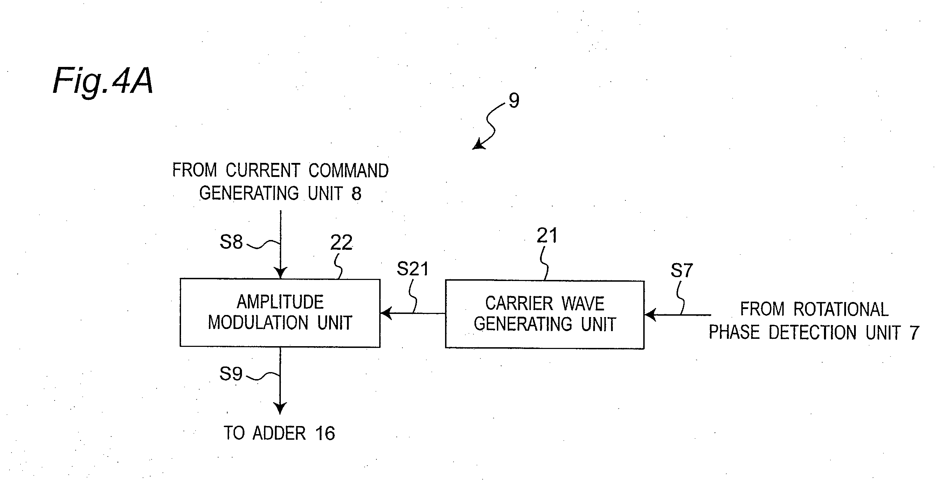

FIG. 4A is a detailed block diagram showing the configuration of the voltage command generating unit 9 in the first embodiment of the invention. The voltage command generating unit 9 includes a carrier wave generating unit 21 and an amplitude modulation unit 22.

The carrier wave generating unit 21 generates a carrier wave signal S21, which is a sine wave signal of electrical angle period TEA, based on the rotational phase signal S7. The amplitude modulation unit 22 generates the voltage command signal S9 by amplitude modulating the carrier wave signal S21 using the to-be-modulated signal denoted by the current command signal S8. The carrier wave generating unit 21 detects only the time of the rotational phase signal S7 at each electrical angle period TEA, and does not detect the carrier distortion of the current detection signal S6 in the rotational phase signal S7. As a result, the carrier wave generating unit 21 does not impart the waveform distortion of the rotational phase signal S7 on the carrier wave signal S21. The amplitude modulation unit 22 generates the voltage command signal S9 based on the current command signal S8 containing no waveform distortion and the carrier wave signal S21. The voltage command signal S9 therefore does not contain the waveform distortion of the current detection signal S6.

The envelope of the voltage command signal S9 represents the current command signal S8. The size of the envelope curve is controlled by comparing the actual speed and the target speed so that the difference therebetween decreases. More specifically, the voltage command signal S9 has a waveform corresponding to the electrical angle period TEA as shown in FIG. 3 (D), but when observed on the smooth voltage period TPW scale is a waveform substantially identical to the current detection signal S6 shown in FIG. 3 (A) minus the waveform distortion.

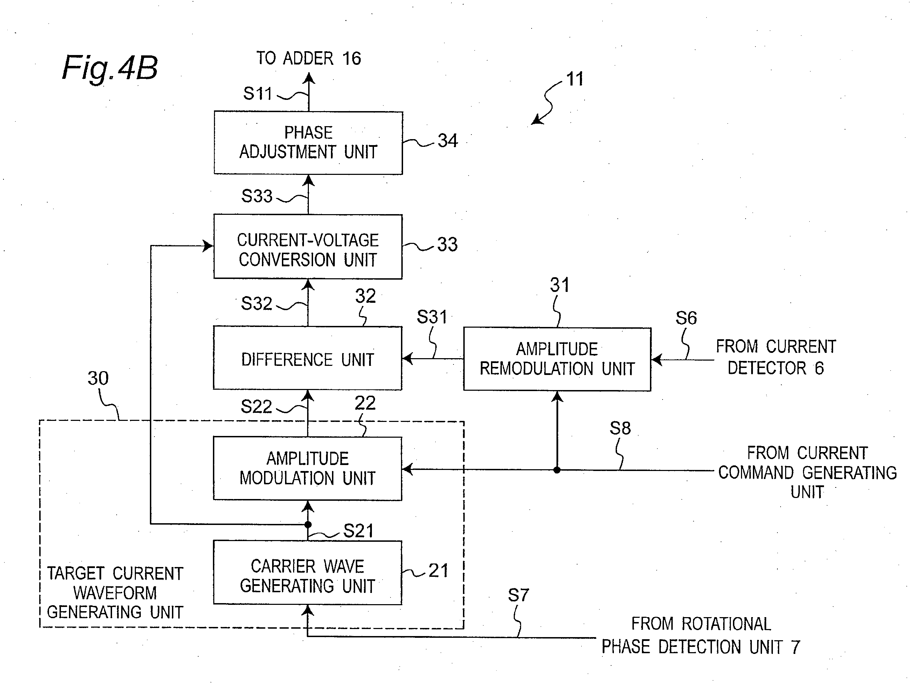

The configuration and operation of the voltage command correction unit 11 in the first embodiment of the invention is described next. FIG. 4B is a detailed block diagram showing the configuration of the voltage command correction unit 11 in the first embodiment of the invention. The voltage command correction unit 11 includes the carrier wave generating unit 21, the amplitude modulation unit 22, an amplitude remodulation unit 31, a difference unit 32, a current-voltage conversion unit 33, and a phase adjustment unit 34.

The carrier wave generating unit 21 and amplitude modulation unit 22 render a target current waveform generating unit 30. The target current waveform generating unit 30 is identical in configuration to the voltage command generating unit 9 shown in FIG. 4A, and detailed description thereof is thus omitted. The amplitude-modulated signal S22 generated by the amplitude modulation unit 22 in FIG. 4B is equivalent to the voltage command signal S9 generated by the voltage command generating unit 9. The amplitude-modulated signal S22 is also called a target current waveform signal. More specifically, the target current waveform generating unit 30 generates the target current waveform signal S22, which denotes the target current waveform of the motor 5, based on the rotational phase signal S7 and current command signal S8 The target current waveform generating unit 30 is identical to the voltage command generating unit 9, and the voltage command signal S9 from the voltage command generating unit 9 could represent the target current waveform signal S22. In this case the voltage command correction unit 11 includes the voltage command generating unit 9.

The amplitude remodulation unit 31 extracts the carrier signal from the current detection signal S6 (FIG. 2 (B) and FIG. 3 (A)), remodulates the amplitude using the to-be-modulated signal denoted by the current command signal S6, and outputs remodulated amplitude signal S31. The amplitude of the extracted carrier wave signal is adjusted to equal the amplitude of the carrier wave signal S21 in the target current waveform generating unit 30. The remodulated amplitude signal S31 contains the same waveform distortion as the current command signal S8 because of the extracted carrier wave signal. The size of the envelope is controlled by comparing the actual speed and the target speed so that the difference therebetween decreases. More specifically, the remodulated amplitude signal S31 has a waveform substantially the same as the current detection signal S6 shown in FIG. 3 (A).

The difference unit 32 subtracts the remodulated amplitude signal S31 from the target current waveform signal S22 and generates current correction signal S32. The current command signal S8 of the to-be-modulated signal and the carrier wave signal minus the waveform distortion are both contained in equal amounts in the target current waveform signal S22 and amplitude modulation signal S20, and are therefore subtracted from each, Only the waveform distortion of the current detection signal S6 remains in the current correction signal S32 in inverse phase to the waveform distortion of the current detection signal S6. The amplitude of the waveform distortion in the current detection signal S6 contained in the current correction signal S32 is substantially proportional to the amplitude of the smooth voltage S3, which pulsates greatly at the smooth voltage period TPW, as will be known from FIG. 2 (a) and (b).

The DC/AC converter 4 has, for example, three switching circuit pairs each containing one high potential transistor and one low potential transistor, and commutates six times each electrical angle period TEA. So that the high potential transistor and low potential transistor in each switching circuit are not simultaneously in the on state during the six commutations, dead time in which both transistors are off is provided. Because this dead time results from commutating six times in the electrical angle period TEA, waveform distortion composed of mainly the sixth-order harmonic of the electrical angle frequency is introduced to the current detection signal S6. If the number of commutations within the electrical angle period TEA changes, harmonic distortion of an order equal to the number of commutations occurs.

To compensate for this waveform distortion in the current detection signal S6, the voltage command correction unit 11 generates a current correction signal S32 of substantially the same amplitude and frequency but inverse phase to the waveform distortion in the current detection signal S6. Waveform distortion in the current detection signal S6 appears in the smooth voltage S3 as primarily distortion of the fifth harmonic of the electrical angle frequency. This fifth-order harmonic distortion of the electrical angle frequency in the smooth voltage S3 produces harmonic distortion in the AC current SC flowing to the AC power supply 1. If the fifth-order harmonic distortion of the electrical angle frequency in the smooth voltage S3 is reduced, waveform distortion in the current detection signal S6 and harmonic distortion of the AC current SC can also be reduced.

Because the current correction signal S32 contains sixth-order harmonic distortion, this sixth-order harmonic distortion must be converted to fifth-order harmonic distortion in order to compensate for the distortion of the fifth-order harmonic of the electrical angle frequency in the smooth voltage S3. The current-voltage conversion unit 33 therefore multiplies the current correction signal S32 containing sixth-order harmonic current distortion with the carrier wave signal S21 from the target current waveform generating unit 30 to produce the fifth-order harmonic of the difference frequency and the seventh-order harmonic of the sum frequency. The current-voltage conversion unit 33 extracts only the fifth-order harmonic and outputs the current-voltage conversion signal S33. Note that the carrier wave signal S21 could be input from the voltage command generating unit 9.

The phase adjustment unit 34 generates the voltage command correction signal S11 as a signal that tunes the phase of the current-voltage conversion signal S33. More particularly, the current correction signal S32 is inverse phase to the waveform distortion of the current correction signal S32, and the phase adjustment unit 34 therefore adjusts the phase of the current-voltage conversion signal S33 to, for example, minimize the harmonic distortion of the AC current SC. Note that the phase adjustment unit 34 can be disposed between the difference unit 32 and current-voltage conversion unit 33, or it can be omitted.

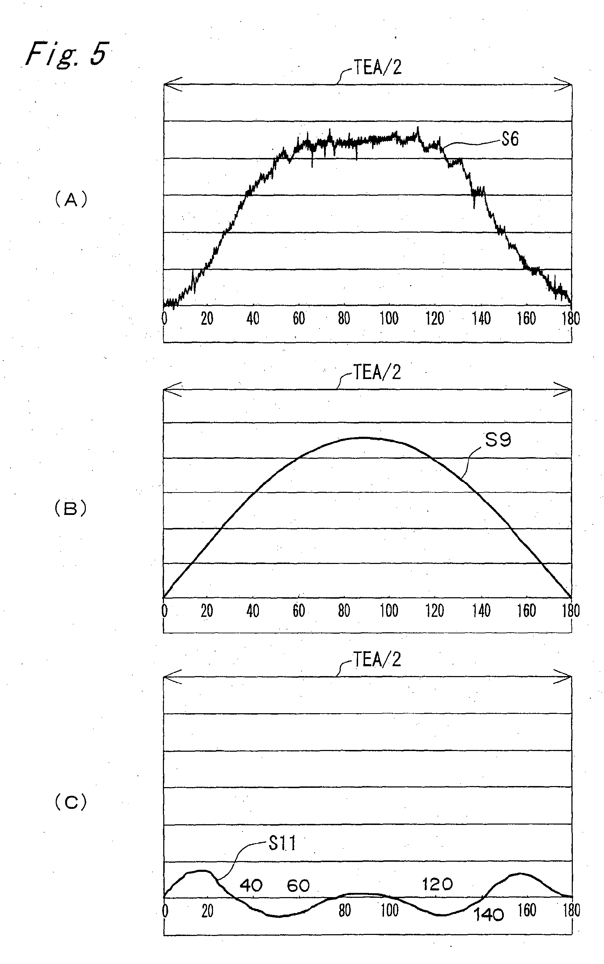

FIG. 5 (A), FIG. 5 (B), and FIG. 5 (C) respectively show the current detection signal S6, the voltage command signal S9, and the voltage command correction signal S11 in half of electrical angle period TEA. The current detection signal S6 shown in FIG. 5 (A) corresponds to the current detection signal S6 shown in FIG. 3 (B), and contains waveform distortion at the sixth harmonic of the electrical angle frequency. The voltage command correction signal S11 shown in FIG. 5 (C) corresponds to the voltage command correction signal S11 in FIG. 3 (E), and contains waveform distortion at the fifth harmonic of the electrical angle frequency.

The adder 16 adds the voltage command signal S9 containing no waveform distortion and the voltage command correction signal S11 containing waveform distortion inverse phase to the waveform distortion of the current detection signal S6, and outputs sum signal S16.

Based on this sum signal S16, the PWM signal generator 10 generates a PWM signal S10 containing waveform distortion that is inverse phase to the current detection signal S6.

Based on the PWM signal S10, the DC/AC converter 4 generates a drive voltage S4 containing waveform distortion that is inverse phase to the current detection signal S6.

Waveform distortion in the current detection signal S6 is reduced as a result of driving the motor 5 by means of the drive voltage S4 containing waveform distortion that is inverse phase to the current detection signal S6. The actual speed of the motor 5 is also controlled to go to the target speed as a result of the voltage command generating unit 9, the PWM signal generator 10, and the DC/AC converter 4 reflecting the current command signal S8 denoting the result of comparing the actual speed with the target speed on the drive voltage S4.

As described above the amplitude of the waveform distortion in the current detection signal S6 is substantially proportional to the amplitude of the smooth voltage S3. The current correction signal S32 contains waveform distortion that is substantially equal in amplitude and inverse phase to the current detection signal S6 because of the configuration of the voltage command correction unit 11 shown in FIG. 4B. As a result, the smooth voltage S3 based on the current correction signal S32 can effectively reduce the waveform distortion of the current detection signal S6 substantially proportionally to the amplitude of the smooth voltage S3.

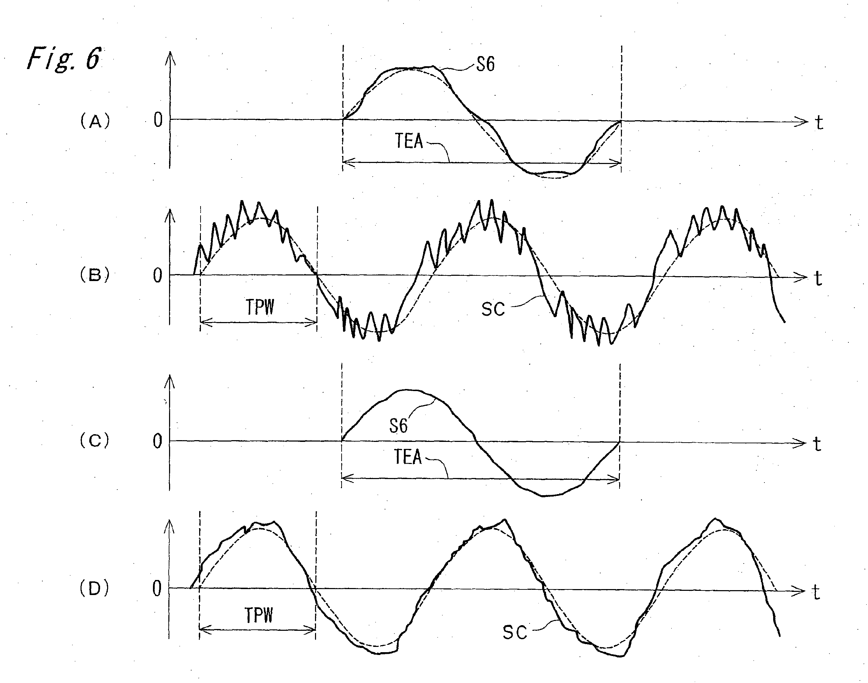

FIG. 6 (A) and FIG. 6(B) respectively show the current detection signal S6 and the AC current SC when the voltage command correction unit 11 is not operating. FIG. 6 (C) and FIG. 6 (D) respectively show the current detection signal S6 and the AC current SC when the voltage command correction unit 11 is operating. Similarly to the relationship between FIG. 3 (A) and FIG. 3 (B), FIG. 6 (A) and FIG. 6 (C) show the signals in FIG. 6 (B) and FIG. 6 (D), respectively, on a longer time base denoted by electrical angle period TEA and smooth voltage period TPW.

In FIG. 6 (A) if the current detection signal S6 contains harmonic distortion as indicated by comparison with the distortion-free waveform denoted by the dotted line, this waveform distortion is propagated through the smoothing unit 3 and rectification unit 2 and affects the AC current SC. As a result, the AC current SC as shown in FIG. 6 (B) becomes a waveform with a harmonic component and deviates from the distortion-free waveform denoted by the dotted line. When the voltage command correction unit 11 operates, waveform distortion in the current detection signal S6 is reduced as shown in FIG. 6 (C), and harmonic distortion in the AC current SC is therefore also reduced as shown in FIG. 6 (D).

This first embodiment of the invention thus reduces waveform distortion in the current detection signal S6 by using the voltage command correction unit 11 to generate a voltage command correction unit 11 1 containing waveform distortion that is substantially proportional to the amplitude of the smooth voltage S3 and inverse phase to the waveform distortion contained in the current detection signal S6. As a result, current distortion flowing to the motor 5 can be suppressed while reducing the capacity of the smoothing capacitor and using a smoothing unit 3 that generates a smooth voltage S3 that pulsates greatly. By thus reducing harmonics in the AC current SC and preventing contamination of the commercial power supply, power supply efficiency is improved not only in the inverter device according to this first embodiment of the invention but also in other electrical devices connected to the same power supply system.

Furthermore, because the physical size of the smoothing capacitor can be reduced, the inverter device can also be reduced in size and weight, and the size and weight of the air conditioner in which the inverter device is used can also be easily reduced. The cost of the inverter device and air conditioner can also be reduced by making the smoothing capacitor, inverter device, and air conditioner smaller. Eliminating the need for a PFC circuit also contributes to reducing the cost of the inverter device and air conditioner.

The inverter device of this first embodiment of the invention is not limited to use in air conditioners, and can be used in any electrical device that uses an inverter device

In FIG. 1 the current command generating unit 8, the voltage command generating unit 9, and the voltage command correction unit 11 operate based on the rotational phase signal S7, but could operate based on the current detection signal S6 instead of the rotational phase signal S7 because the rotational phase signal S7 is derived from the current detection signal S6. More specifically, the current command generating unit 8 can generate the current command signal S8 based on the current detection signal S6, the voltage phase signal S12, and the target speed signal S15. The voltage command generating unit 9 generates the voltage command signal S9 based on the current detection signal S6 and the current command signal S8. The voltage command correction unit 11 generates the voltage command correction signal S11 based on the current detection signal S6 and the current command signal S8.

In addition, the current command generating unit 8 operates based on the voltage phase signal S12, but could operate using the current detection signal S6 instead of the voltage phase signal S12 because the smooth voltage period TPW is generated from the envelope of the current detection signal S6. More particularly, the current command generating unit 8 generates the current command signal S8 based on the current detection signal S6 and the target speed signal S15. As a result, the voltage command generating unit 9 can generate the voltage command signal S9 based on the current detection signal S6 and the target speed signal S15. The voltage command correction unit 11 can then generate the voltage command correction signal S11 based on the current detection signal S6 and the target speed signal S15.

### Embodiment 2

A second embodiment of the invention is described next focusing on the differences with the first embodiment. Other aspects of the configuration, operation, and effect of this second embodiment are identical to the first embodiment, and further description thereof is thus omitted.

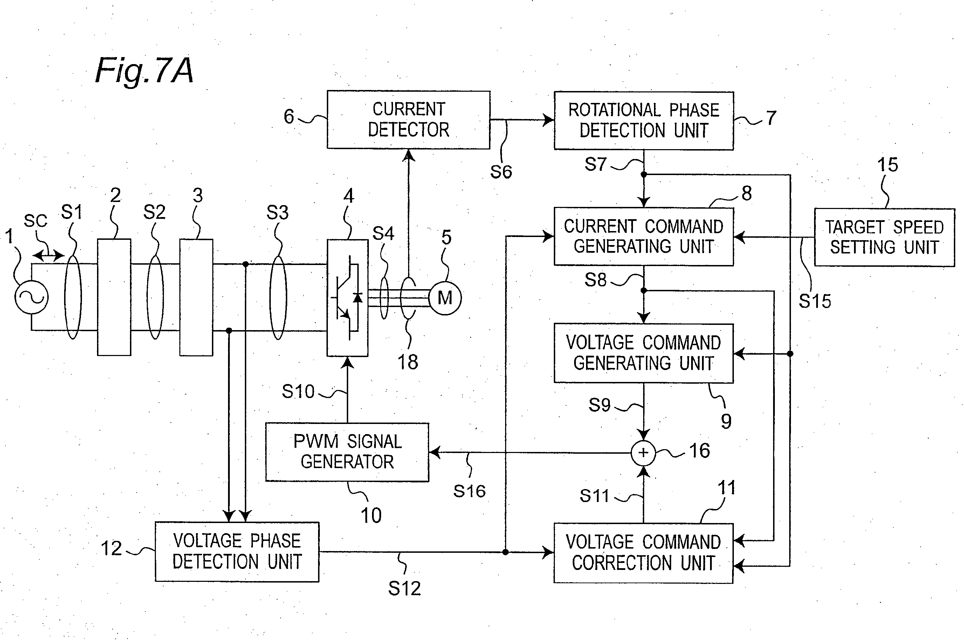

FIG. 7A is a block diagram showing the configuration of the inverter device in this second embodiment of the invention. In FIG. 7A the voltage command correction unit 11 generates the voltage command correction signal S11 based on the voltage phase signal S12, the rotational phase signal S7, and the current command signal S8.

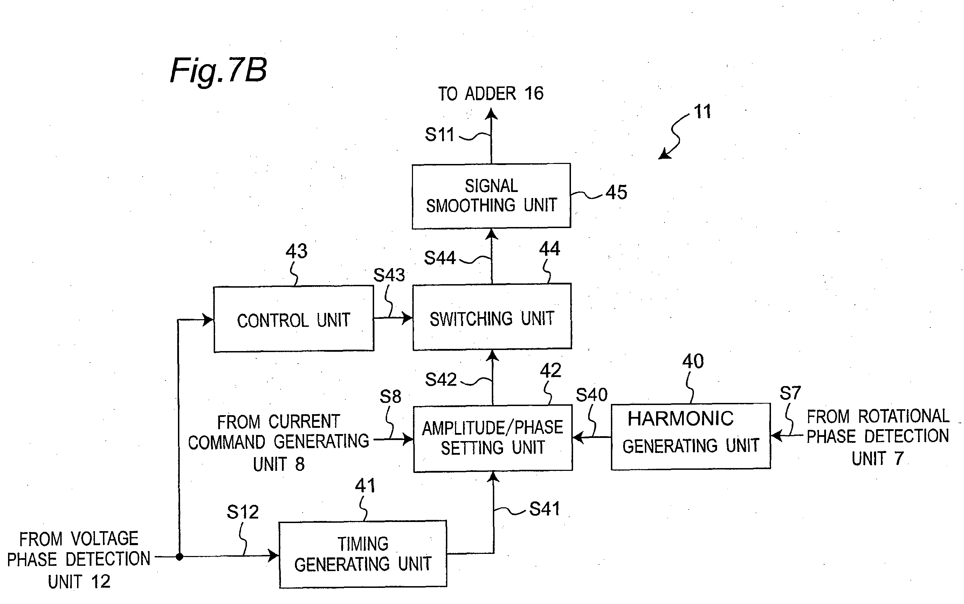

FIG. 7B is a detailed block diagram showing the configuration of the voltage command correction unit 11 in the second embodiment of the invention. This voltage command correction unit 11 includes a harmonic generating unit 40, a timing generating unit 41, an amplitude/phase setting unit 42, a control unit 43, a switching unit 44, and a signal smoothing unit 45.

The harmonic generating unit 40 generates a harmonic signal S40 representing the fifth harmonic of the electrical angle frequency based on the rotational phase signal S7. The timing generating unit 41 generates a timing signal S41 denoting timing within the smooth voltage period TPW based on the S12. In a typical application the timing generating unit 41 divides the smooth voltage period TPW into a plurality of different period (called secondary smooth voltage periods), and generates timing signals S41 indicating the beginning and end of each secondary smooth voltage period.

The amplitude/phase setting unit 42 sets a reference amplitude that changes in the smooth voltage period TPW based on the timing signal 541. The amplitude/phase setting unit 42 multiplies this reference amplitude by the typical amplitude of the current command signal S8, and outputs the current control amplitude. The typical amplitude of the current command signal S8 (FIG. 2 (C)) is set to the peak value in the smooth voltage period TPW. The current control amplitude is thus controlled so that the difference between the actual speed and the target speed decreases as determined by comparison. The amplitude/phase setting unit 42 sets the amplitude of the harmonic signal S40 to this current control amplitude to generate an amplitude/phase setting signal S42.

The amplitude of the amplitude/phase setting signal S42 is typically substantially constant within each secondary smooth voltage period, and can change in each secondary smooth voltage period within the smooth voltage period TPW. For example, the amplitude of the amplitude/phase setting signal S42 changes in each secondary smooth voltage period substantially proportionally to the amplitude of the smooth voltage S3. At the same time, the amplitude of the amplitude/phase setting signal S42 in each secondary smooth voltage period changes proportionally to the typical amplitude of the current command signal S8.

The amplitude/phase setting unit 42 sets the phase of the amplitude/phase setting signal S42 based on the timing signal S41. The phase of the amplitude/phase setting signal S42 is typically substantially constant in each secondary smooth voltage period, and can change each time the secondary smooth voltage period changes in the smooth voltage period TPW.

The control unit 43 generates a control signal S43 for the period in which the amplitude/phase setting signal S42 is passed (the pass period) in the smooth voltage period TPW or each smooth voltage period TPW based on the voltage phase signal S12. The switching unit 44 switches on and off based on the control signal S43, and outputs a pass signal S44 representing the amplitude/phase setting signal S42 that is passed in the pass period. The timing of the beginning and end of the pass period can vary randomly within the smooth voltage period TPW and are set for each smooth voltage period TPW. Either a pass period in which the amplitude/phase setting signal 842 passes slightly, or a no-pass period in which the signal is completely blocked, can be set randomly in each smooth voltage period TPW.

The pass period is also called a correction period of a non-zero length, and the no-pass period is also called a zero-length correction period. The S43 is also called a correction period signal. More specifically, the control signal S43 represents either a zero-length correction period or a non-zero-length correction period in each smooth voltage period TPW. The control unit 43 sets the either or both the beginning and the end of the non-zero-length correction period to a desired time in each smooth voltage period TPW in the non-zero-length correction period.

The signal smoothing unit 45 smoothes sudden changes in the amplitude and phase of the pass signal S44 and outputs the smoothed signal as the voltage command correction signal S11, If the pass signal S44 is sufficiently smooth, the signal smoothing unit 45 can be omitted.

In another aspect of the invention the amplitude/phase setting unit 42 generates a plurality of secondary amplitude/phase setting signals of different amplitude or phase based on the harmonic signal S40 and the current command signal S8. The amplitude/phase setting unit 42 also selects one of these plural secondary amplitude/phase setting signals in each secondary smooth voltage period based on the timing signal S41 to output the amplitude/phase setting signal S42.

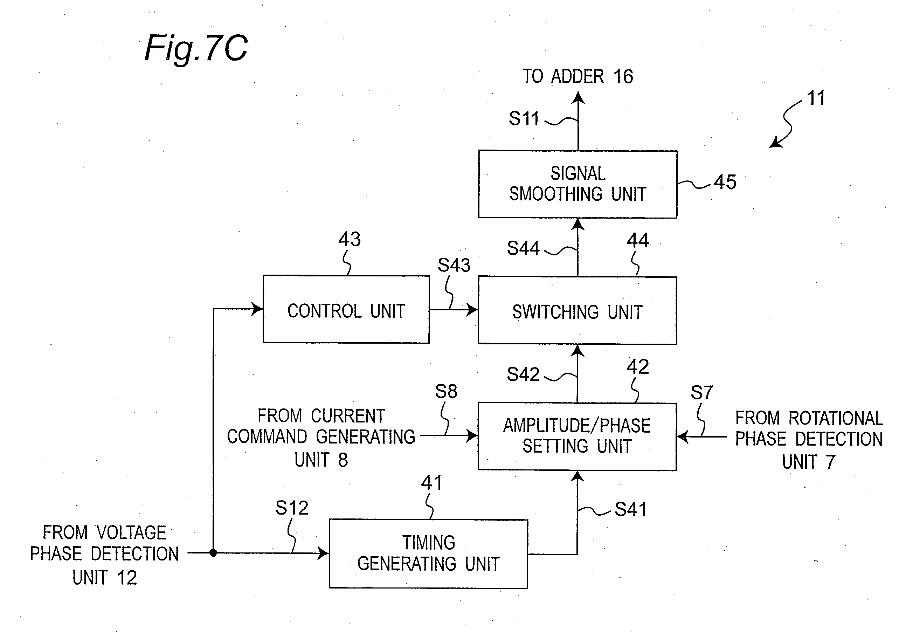

In yet another aspect of the invention as shown in FIG. 7C, the amplitude/phase setting unit 42 can omit the harmonic generating unit 40 shown in FIG. 7B, and the rotational phase signal S7 can be input directly to the amplitude/phase setting unit 42. In the amplitude /phase setting unit 42 the frequency of the amplitude/phase setting signal S42 is constant and substantially equal to the fifth-order harmonic distortion, and is preset. Based on the rotational phase signal S7, the phase of the amplitude/phase setting signal S42 is advanced if the actual speed increases and delayed if the actual speed decreases.

By rendering the voltage command correction unit 11 as described above, the frequency of the voltage command correction signal S11 is substantially equal to fifth-order harmonic distortion as in the first embodiment. The amplitude of the voltage command correction signal S11 l is substantially constant in each secondary smooth voltage period, and can vary substantially proportionally to the amplitude of the smooth voltage S3, for example, each time the secondary smooth voltage period changes in the smooth voltage period TPW.

In addition, the amplitude of the voltage command correction signal S11 in each secondary smooth voltage period changes proportionally to the typical amplitude of the current command signal S8, and is controlled so that the difference between the actual speed and the target speed decreases. As a result, the amplitude of the voltage command correction signal S11 can be made substantially equal to the amplitude of the sixth harmonic in the current detection signal S6 as described in the first embodiment.

The amplitude/phase setting unit 42 also first adjusts the phase of the voltage command correction signal S11 in each secondary smooth voltage period so that waveform distortion is reduced in the current detection signal S6, the smooth voltage S3, and the AC current SC. If the phase of the voltage command correction signal S11 also varies in each secondary smooth voltage period, waveform distortion in the AC current SC described above may also decrease, The phase of the voltage command correction signal S11 after adjustment is substantially the inverse of the phase of the sixth harmonic contained in the current detection signal S6. Because the phase of the sixth harmonic is in a specific relationship to the rotational phase signal S7 and the amplitude/phase setting unit 42 operates on the rotational phase signal S7, if the amplitude/phase setting unit 42 first adjusts the phase, this inverse phase relationship can be maintained even if the adjusted phase is then fixed.

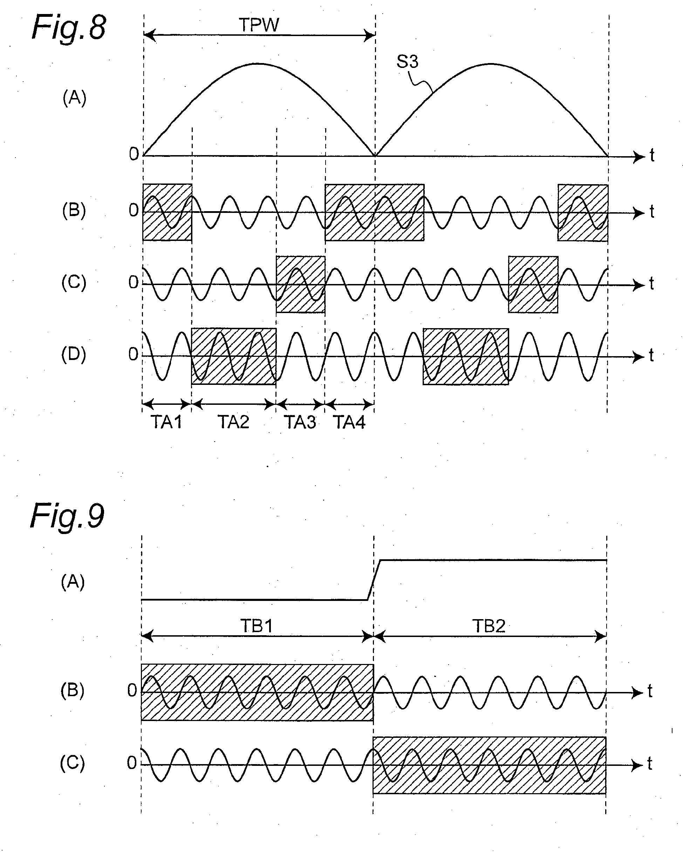

FIG. 8 is a waveform chart describing the operation of the second embodiment shown in FIG. 7B and FIG. 7C. FIG. 8 (A) shows the waveform of the smooth voltage S3, and FIG. 8 (B), (C), and (D) show secondary amplitude/phase setting signals for the smooth voltage S3. The frequency of the secondary amplitude/phase setting signal in the embodiment shown in FIG. 7B is preset to the frequency of the harmonic signal S40, and substantially equal to the fifth-order harmonic distortion in the embodiment shown in FIG. 7C. The amplitude and phase are set to a predetermined value on each of the three channels. The amplitude of the secondary amplitude/phase setting signal in FIG. 8(C) is equal to the secondary amplitude/phase setting signal in FIG. 8 (B) while the phase is advanced. The amplitude of the secondary amplitude/phase setting signal in FIG. 8 (D) is greater than the amplitude of the secondary amplitude/phase setting signal in FIG. 8 (C) while the phase is the same.

The smooth voltage period TPW is divided into secondary smooth voltage periods TA1, TA2, TA3, TA4. The secondary amplitude/phase setting signal in FIG. 8 (B) is selected in secondary smooth voltage periods TA1 and TA4, the secondary amplitude/phase setting signal in FIG. 8 (D) is selected in secondary smooth voltage period TA2, and the secondary amplitude/phase setting signal in FIG. 8 (C) is selected in secondary smooth voltage period TA3. The selected secondary amplitude/phase setting signals are indicated by hash marks in the figures. The selected secondary amplitude/phase setting signal is then used to generate the voltage command correction signal S11

When the smooth voltage S3 is high, the voltage command correction signal S11 is thus increased, and when the smooth voltage S3 is low, the voltage command correction signal S11 can be decreased. As a result, the voltage command correction signal S11 can be set according to the waveform distortion of the current detection signal S6. In addition, by tuning the phase as shown in FIG. 8 (C), a voltage command correction signal S11 with inverse phase to the waveform distortion of the current detection signal S6 can be generated.

FIG. 9 is a waveform chart describing the operation of the second embodiment shown in FIG. 7C. FIG. 9 (A) is the actual speed determined from the rotational phase signal S7, and increases from period TB1 to period TB2. FIG. 9 (B) and FIG. 9 (C) show the waveform of the secondary amplitude/phase setting signal in periods TB1 and TB2. The frequency of these two secondary amplitude/phase setting signals is substantially equal to the fifth-order harmonic distortion, and is preset. The amplitude and phase of each signal are predetermined. The amplitude of the secondary amplitude/phase setting signal in FIG. 9 (C) is equal to the secondary amplitude/phase setting signal in FIG. 9 (B) while the phase is advanced.

The secondary amplitude/phase setting signal in FIG. 9 (B) is selected in period TB1, and the secondary amplitude/phase setting signal in FIG. 9 (C) is selected in period TB2, as indicated by the hash marks. The voltage command correction signal S11 is generated based on the selected secondary amplitude/phase setting signal. As a result, the phase of the voltage command correction signal S11 can be advanced when the actual speed rises, and a voltage command correction signal S11 that is inverse phase to the waveform distortion of the current detection signal S6 can be generated.

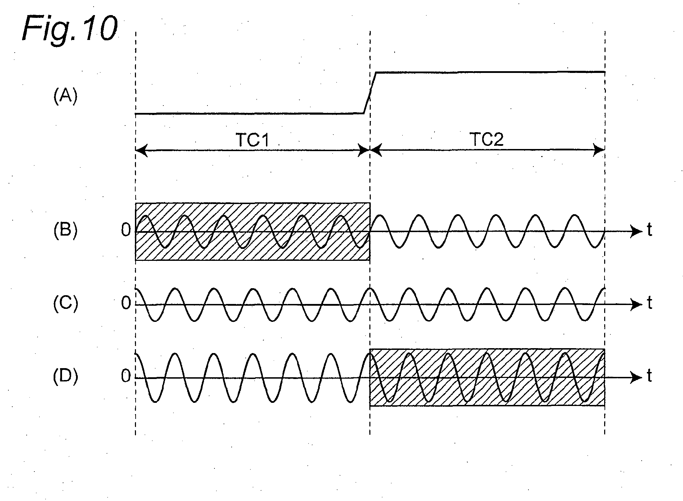

FIG. 10 are waveform charts describing the operation of the second embodiment in FIG. 7B and FIG. 7C. FIG. 10 (A) shows the level of the current command signal S8, which rises from period TC1 to period TC2. FIG. 10 (B), (C), and (D) show the secondary amplitude/phase setting signals. The frequency of the secondary amplitude/phase setting signals in the embodiment shown in FIG. 7B is preset to the frequency of the harmonic signal S40, and is preset substantially equal to the fifth-order harmonic distortion in the embodiment shown in FIG. 7C. The amplitude and phase are set to a predetermined value on each of the three channels. The amplitude of the secondary amplitude/phase setting signal in FIG. 10 (C) is equal to the secondary amplitude/phase setting signal in FIG. 10 (B) while the phase is advanced. The amplitude of the secondary amplitude/phase setting signal in FIG. 10(D) is greater than the amplitude of the secondary amplitude/phase setting signal in FIG. 10 (C) while the phase is the same.

The secondary amplitude/phase setting signal in FIG. 10 (B) is selected in period TC1, and the secondary amplitude/phase setting signal in FIG, 10 (D) is selected in period TC2, as indicated by the hash marks. The voltage command correction signal S11 is generated based on the selected secondary amplitude/phase setting signal. As a result, the amplitude of the voltage command correction signal S11 can be further increased when the level of the current command signal S8 rises. As a result, a voltage command correction signal S11 of a substantially equal level can be generated relative to the waveform distortion of the current detection signal S6, which rises with the current command signal S8.

In this second embodiment of the invention the voltage command correction unit 11 generates the voltage command correction signal S11 based on the voltage phase signal S12, the rotational phase signal S7, and the current command signal S8, but can operate in the same way using the current detection signal S6 instead of the current command signal S8. In this case the current detection signal S6 is input instead of the current command signal S8 to the voltage command correction unit 11 in the configuration shown in FIG. 7A, and the current detection signal S6 is input instead of the current command signal S8 to the amplitude/phase setting unit 42 in the configurations shown in FIG. 7B and FIG. 7C.

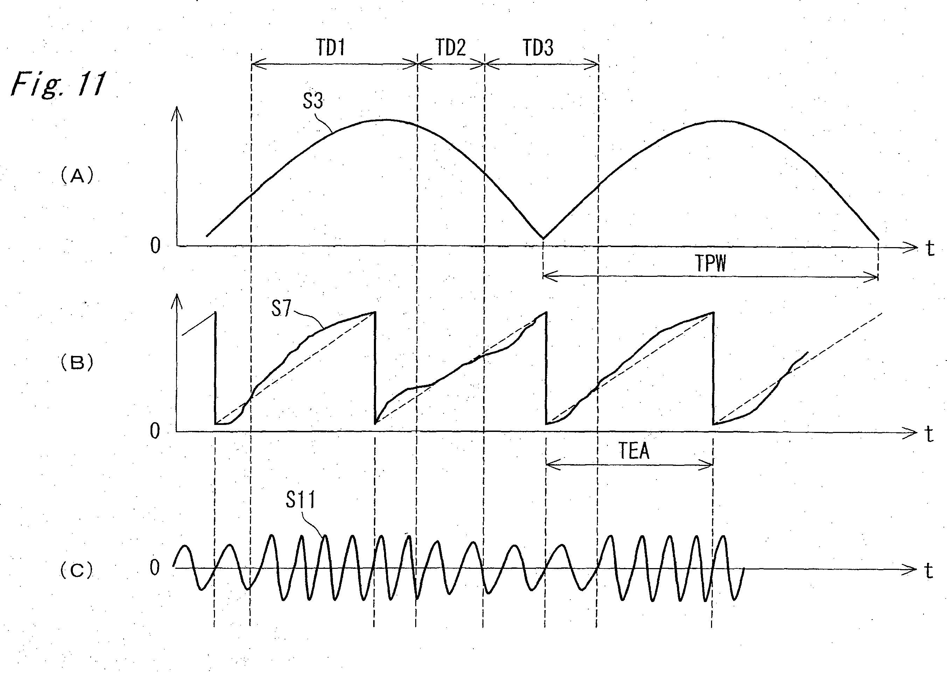

FIG. 11 is a waveform chart describing the operation of the second embodiment shown in FIG. 7B or FIG. 7C. FIG. 11(A) shows the waveform of the smooth voltage S3, and FIG. 11 (B) and FIG. 11 (C) show the rotational phase signal S7 and voltage command correction signal S11 related to the smooth voltage S3. In order to see the waveform in FIG. 11 (C) better, the actual speed is reduced and the electrical angle period TEA is increased compared with the examples shown in FIG. 3 (A) and FIG.3 (B). The voltage command correction signal S11 in FIG. 11 (C) contains five fifth-order harmonic waves in one electrical angle period TEA. The amplitude and phase of the voltage command correction signal S11 change in each of the secondary smooth voltage periods TD1, TD2, TD3 in the smooth voltage period TPW. The timing when the voltage command correction signal S11 level is greatest is not coincident to the timing when the smooth voltage S3 peaks, and is offset slightly.

In the waveform charts shown in FIG. 8 (A) to FIG. 11 (C) the switching unit 44 in FIG. 7B and FIG. 7C entirely passes the amplitude/phase setting signal S42 to generate the voltage command correction signal S11.

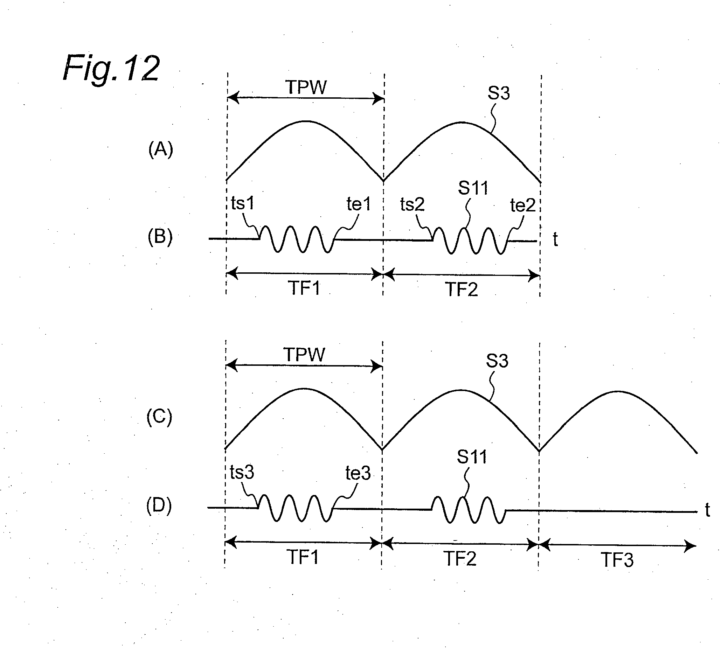

FIG, 12 is a waveform chart describing the operation of the second embodiment shown in FIG. 7B or FIG. 7C. FIG. 12 (A) and FIG. 12 (C) show the smooth voltage S3 in the smooth voltage period TPW, and FIG. 12 (B) and FIG. 12 (D) show the voltage command correction signal S11 for the smooth voltage S3. FIG. 12 (A) to FIG. 12 (D) describe primarily the operation of the control unit 43 and switching unit 44, and the changes in each secondary smooth voltage period are omitted.

In FIG. 12 (B) the control unit 43 sets the pass period from starting time ts1 to end time te1 for each smooth voltage period TPW, and the switching unit 44 turns on in the pass period to output the voltage command correction signal S11. The start time ts1 and end time te1 are set randomly in each smooth voltage period TPW by the control unit 43. More specifically, the timing of the start time ts1 in period TE1 of the smooth voltage period TPW, and the timing of the start time ts2 in period TE2, can be different. The timing of the end time te1 in period TE1 of the smooth voltage period TPW, and the timing of the end time te2 in period TE2, can also be changed. The timing of either or both of the start time and end time can also be changed.

In FIG. 12 (D) the control unit 43 controls whether there is a pass period from the start time ts3 to the end time te3 by randomly setting either in each smooth voltage period TPW. More specifically, periods TF1 and TF2 in the smooth voltage period TPW are the pass periods in which at least a part of the amplitude/phase setting signal S42 is passed, and period TF3 is the no-pass period in which the amplitude/phase setting signal S42 is blocked completely.

As described above, the smooth voltage S3 pulsates greatly in the smooth voltage period TPW (FIG. 12 (A) and FIG. 12 (C)), and the current detection signal S6 (FIG. 2 (B)) is a waveform with a greatly pulsating envelope in the smooth voltage period TPW. When the amplitude of the current detection signal S6 goes low in each smooth voltage period TPW, the detection precision of the actual speed from the rotational phase signal S7 deteriorates, and the frequency and phase precision of the amplitude/phase setting signal S42 deteriorates. The amplitude of the voltage command signal S9 also drops, and the amplitude of the fifth-order harmonic distortion therefore becomes unstable.

In such cases the control unit 43 and switching unit 44 are used to interrupt correction only in the low amplitude period of the current detection signal S6. Interrupting this correction is not a problem because the waveform distortion of the current detection signal S6 is small even when correction is interrupted. This prevents amplifying correction error.

The timing of the start and end of the pass period in each smooth voltage period TPW varies randomly, and either a pass period or no-pass period is set randomly in each smooth voltage period TPW. This enables suppressing introducing new distortion caused by the mutual modulation of the sixth-order harmonic distortion and periodicity of the smooth voltage period TPW in the pass period in the current detection signal S6

In addition to the effect of the first embodiment described above, this second embodiment enables rendering the voltage command correction unit 11 as shown in FIG. 7B and FIG. 7C more easily and at a lower cost than the configuration of the first embodiment shown in FIG. 4B.

The first embodiment determines the waveform distortion from the difference between the target current waveform and the actual current waveform. Waveform distortion can thus be ideally minimized. The second embodiment produces the basic waveform distortion based on the rotational phase signal S7, and then corrects this basic waveform distortion based on the current command signal S8 and voltage phase signal S12 to generate the voltage command correction signal S11. Compared with the first embodiment, the second embodiment has fewer elements that are corrected automatically using the motor 5 detection signal, and makes the correction operation more robust and resistant to a drop in the smooth voltage S3 or an increase in waveform distortion. In addition, as described above, randomly setting the pass period and no-pass period and randomly setting the start and end times of the pass period affords even greater resistance to disruptions.

The voltage command correction unit 11 operates based on the voltage phase signal S12 in the configuration shown in FIG. 7A, but could use the current detection signal S6 instead of the voltage phase signal S12 because the smooth voltage period TPW is derived from the envelope of the current detection signal S6. In addition, because the rotational phase signal S7 is generated from the current detection signal S6, the current detection signal S6 can be used instead of the rotational phase signal S7. That is, the voltage command correction unit 11 generates the voltage command correction signal S11 based on the current detection signal S6 and the current command signal S8. Yet further, because the current command signal S8 is generated based on the current detection signal S6 and the target speed signal S15, the voltage command correction signal S11 can alternatively generate the voltage command correction signal S11 based on the current detection signal S6 and the target speed signal S15.

Although the present invention has been described in connection with the preferred embodiments thereof with reference to the accompanying drawings, it is to be noted that various changes and modifications will be apparent to those skilled in the art.

The invention can be used in inverter devices and air conditioners.

## Claims

1. An inverter device comprising:
a rectification means (2) that rectifies an AC voltage from an AC power supply (1) and generates a rectified voltage;
a smoothing means (3) that smoothes the rectified voltage and generates a smooth voltage containing the waveform of a smooth voltage period corresponding to half the AC voltage period;
a DC/AC conversion means (4) that converts the smooth voltage to a drive voltage representing a pulse-width modulated alternating voltage, and supplies the drive voltage to a motor (5);
a current detection means (6) that detects the motor current flowing to the motor (5) as a result of the drive voltage, the motor current containing the waveform of the smooth voltage period and waveform distortion, and generates a current detection signal;
a target speed setting means (15) that generates a target speed signal representing the target speed of the motor (5);
a voltage command output means (7-9) that generates and outputs a voltage command signal representing the control level of the to-be-modulated signal for pulse width modulation based on the current detection signal and target speed signal;
a voltage command correction means (11) that generates a voltage command correction signal for correcting waveform distortion based on the current detection signal and target speed signal;
a to-be-modulated signal generating means (16) that adds the voltage command signal and the voltage command correction signal, and generates the resulting sum signal as the to-be-modulated signal; and
a pulse width modulation signal generating means (10) that generates the pulse width modulation signal based on the to-be-modulated signal;
wherein said DC/AC conversion means (4) generates the drive voltage based on the pulse width modulation signal, wherein
said voltage command output means (9) includes
a rotational phase detection means (7) that detects a rotational phase signal representing the rotational phase of the motor (5) based on the current detection signal,
a current command generating means (8) that generates a current command signal representing the motor current control value based on the rotational phase signal and the target speed signal, and
a voltage command generating means (9) that generates a voltage command signal based on the rotational phase signal and current command signal; and
said voltage command correction means (11) generates the voltage command correction signal based on the rotational phase signal and the current command signal.

2. The inverter device described in claim 1, wherein:
said voltage command correction means (11) includes a target current waveform generating unit (21-22) that generates a target current waveform signal representing the desired motor current waveform based on the rotational phase signal and current command signal; and
generates the voltage command correction signal based on the current detection signal, the current command signal, and the target current waveform signal.

3. The inverter device described in claim 1, further comprising:
a voltage phase detection means (12) that detects a voltage phase signal representing the phase of the smooth voltage.

4. The inverter device described in claim 3, wherein said current command generating means (8) generates the current command signal based on the voltage phase signal.

5. The inverter device described in claim 3, wherein said voltage command correction means (11) generates the voltage command correction signal based on the voltage phase signal.

6. The inverter device described in claim 1, wherein:
said voltage command correction means (11)
includes a control unit (43) that generates a correction period signal representing either a correction period of zero length or a correction period of non-zero length in each smooth voltage period; and
generates a voltage command correction signal when the correction period signal is in the non-zero correction period; and
the control unit (43) sets at least one of the start and end points in the non-zero correction period to a desired time in each smooth voltage period.

7. The inverter device described in claim 1, wherein:
said voltage command correction means (11) changes at least one of the amplitude and phase of the voltage command correction signal.

8. The inverter device described in claim 1, wherein:
said smoothing means (3) includes a smoothing capacitor and a reactor; and
the resonance frequency of the smoothing capacitor and reactor is at least forty times the frequency of the alternating current supply.

9. The inverter device described in claim 8, wherein:
the smoothing capacitor is a film capacitor.

10. An air conditioner comprising:
the inverter device described in claim 1; and
a compressor including a motor (5).

## Patentansprüche

1. Umrichter, umfassend:
ein Rektifizierungsmittel (2), das eine Wechselspannung von einer Wechselspannungsquelle (1) rektifiziert und eine rektifizierte Spannung erzeugt;
ein Glättungsmittel (3), das die rektifizierte Spannung glättet und eine glatte Spannung, die die Wellenform einer glatten Spannungsperiode, die zu der Hälfte der Wechselspannungsperiode korrespondiert, enthält, erzeugt;
ein DC/AC-Wandlungsmittel (4), das die glatte Spannung in eine Betriebsspannung, die eine pulsweitenmodulierte alternierende Spannung repräsentiert, wandelt und die Betriebsspannung an einem Motor (5) bereitstellt;
ein Stromdetektionsmittel (6), das den Motorstrom, der als ein Ergebnis der Betriebsspannung zu dem Motor (5) fließt, detektiert, wobei der Motorstrom die Wellenform der glatten Spannungsperiode und eine Wellenformverzerrung beinhaltet, und ein Stromdetektionssignal erzeugt;
ein Zielgeschwindigkeiteinstellungsmittel (15), das ein Zielgeschwindigkeitsignal, das die Zielgeschwindigkeit des Motors (5) repräsentiert, erzeugt;
ein Spannungsbefehlausgabemittel (7-9), das ein Spannungsbefehlsignal, das den Steuerpegel des zu modulierenden Signals für die Pulsweitenmodulation repräsentiert, basierend auf dem Stromdetektionssignal und dem Zielgeschwindigkeitsignal erzeugt und ausgibt;
ein Spannungsbefehlkorrekturmittel (11), das ein Spannungsbefehlkorrektursignal zum Korrigieren von Wellenformverzerrung basierend auf dem Stromdetektionssignal und dem Zielgeschwindigkeitsignal erzeugt;
ein Zumodulierendessignalerzeugungsmittel (16), das das Spannungsbefehlsignal und das Spannungsbefehlkorrektursignal addiert und das resultierende Summensignal als das zu modulierende Signal erzeugt; und
ein Pulsweitenmodulationssignalerzeugungsmittel (10), das das Pulsweitenmodulationssignal basierend auf dem zu modulierenden Signal erzeugt;
wobei das DC/AC-Wandlungsmittel (4) die Betriebsspannung basierend auf dem Pulsweitenmodulationssignal erzeugt, wobei
das Spannungsbefehlausgabemittel (9) beinhaltet:
ein Rotationsphasendetektionsmittel (7), das ein Rotationsphasensignal, das die Rotationsphase des Motors (5) repräsentiert, basierend auf dem Stromdetektionssignal detektiert,
ein Strombefehlerzeugungsmittel (8), das ein Strombefehlsignal, das den Motorstromsteuerwert repräsentiert, basierend auf dem Rotationsphasensignal und dem Zielgeschwindigkeitsignal erzeugt, und
ein Spannungsbefehlerzeugungsmittel (9), das ein Spannungsbefehlsignal basierend auf dem Rotationsphasensignal und dem Strombefehlsignal erzeugt; und
wobei das Spannungsbefehlkorrekturmittel (11) das Spannungsbefehlkorrektursignal basierend auf dem Rotationsphasensignal und dem Strombefehlsignal erzeugt.

2. Umrichter nach Anspruch 1, wobei:
das Spannungsbefehlkorrekturmittel (11) eine Zielstromwellenformerzeugungseinheit (21-22) beinhaltet, die ein Zielstromwellenformsignal, das die gewünschte Motorstromwellenform repräsentiert, basierend auf dem Rotationsphasensignal und dem Strombefehlsignal erzeugt; und
das Spannungsbefehlkorrektursignal basierend auf dem Stromdetektionssignal, dem Strombefehlsignal und dem Zielstromwellenformsignal erzeugt.

3. Umrichter nach Anspruch 1, des Weiteren umfassend:
ein Spannungsphasendetektionsmittel (12), das ein Spannungsphasensignal, das die Phase der glatten Spannung repräsentiert, detektiert.

4. Umrichter nach Anspruch 3, wobei das Strombefehlerzeugungsmittel (8) das Strombefehlsignal basierend auf dem Spannungsphasensignal erzeugt.

5. Umrichter nach Anspruch 3, wobei das Spannungsbefehlkorrekturmittel (11) das Spannungsbefehlkorrektursignal basierend auf dem Spannungsphasensignal erzeugt.

6. Umrichter nach Anspruch 1, wobei:
das Spannungsbefehlkorrekturmittel (11)
eine Steuereinheit (43) beinhaltet, die ein Korrekturperiodensignal, das entweder eine Korrekturperiode einer Null-Länge oder eine Korrekturperiode einer Nicht-Null-Länge in jeder glatten Spannungsperiode erzeugt; und
ein Spannungsbefehlkorrektursignal erzeugt, wenn das Korrekturperiodensignal in der Nicht-Null-Korrekturperiode ist; und
wobei die Steuereinheit (43) zumindest einen der Start- und Endpunkte in der Nicht-Null-Korrekturperiode zu einer gewünschten Zeit in jeder glatten Spannungsperiode setzt.

7. Umrichter nach Anspruch 1, wobei:
das Spannungsbefehlkorrekturmittel (11) zumindest eines der Amplitude und der Phase des Spannungsbefehlkorrektursignals ändert.

8. Umrichter nach Anspruch 1, wobei:
das Glättungsmittel (3) eine Glättungskapazität und eine Reaktanz beinhaltet; und
die Resonanzfrequenz der Glättungskapazität und der Reaktanz zumindest vierzigmal die Frequenz der alternierenden Stromquelle ist.

9. Umrichter nach Anspruch 8, wobei:
die Glättungskapazität ein Folienkondensator ist.

10. Klimaanlage, umfassend:
einen Umrichter nach Anspruch 1; und
einen Kompressor, der einen Motor (5) beinhaltet.

## Revendications

1. Dispositif onduleur comprenant :
un moyen de redressement (2) qui redresse une tension alternative provenant d'une alimentation en courant alternatif (1) et génère une tension redressée ;
un moyen de lissage (3) qui lisse la tension redressée et génère une tension lisse contenant la forme d'onde d'une période de tension lisse correspondant à la moitié de la période de tension alternative ;
un moyen de conversion courant continu/courant alternatif (4) qui convertit la tension lisse en une tension d'attaque représentant une tension alternative à modulation d'impulsions en largeur, et fournit la tension d'attaque à un moteur (5) ;
un moyen de détection de courant (6) qui détecte le courant de moteur circulant vers le moteur (5) sous l'effet de la tension d'attaque, le courant de moteur contenant la forme d'onde de la période de tension lisse et une distorsion de forme d'onde, et génère un signal de détection de courant ;
un moyen de réglage de vitesse cible (15) qui génère un signal de vitesse cible représentant la vitesse cible du moteur (5) ;
un moyen de sortie de commande de tension (7-9) qui génère et délivre en sortie un signal de commande de tension représentant le niveau de commande du signal à moduler pour une modulation d'impulsions en largeur sur la base du signal de détection de courant et du signal de vitesse cible ;
un moyen de correction de commande de tension (11) qui génère un signal de correction de commande de tension pour corriger une distorsion de forme d'onde sur la base du signal de détection de courant et du signal de vitesse cible ;
un moyen de génération de signal à moduler (16) qui additionne le signal de commande de tension et le signal de correction de commande de tension, et génère le signal de somme résultant comme étant le signal à moduler ; et
un moyen de génération de signal de modulation d'impulsions en largeur (10) qui génère le signal de modulation d'impulsions en largeur sur la base du signal à moduler ;
dans lequel ledit moyen de conversion courant continu/courant alternatif (4) génère la tension d'attaque sur la base du signal de modulation d'impulsions en largeur, où
ledit moyen de sortie de commande de tension (9) comporte un moyen de détection de phase de rotation (7) qui détecte un signal de phase de rotation représentant la phase de rotation du moteur (5) sur la base du signal de détection de courant,
un moyen de génération de commande de courant (8) qui génère un signal de commande de courant représentant la valeur de commande de courant de moteur sur la base du signal de phase de rotation et du signal de vitesse cible, et
un moyen de génération de commande de tension (9) qui génère un signal de commande de tension sur la base du signal de phase de rotation et du signal de commande de courant ; et
ledit moyen de correction de commande de tension (11) génère le signal de correction de commande de tension sur la base du signal de phase de rotation et du signal de commande de courant.

2. Dispositif onduleur décrit dans la revendication 1, dans lequel :
ledit moyen de correction de commande de tension (11) comporte une unité de génération de forme d'onde de courant cible (21-22) qui génère un signal de forme d'onde de courant cible représentant la forme d'onde de courant de moteur souhaitée sur la base du signal de phase de rotation et du signal de commande de courant ; et
génère le signal de correction de commande de tension sur la base du signal de détection de courant, du signal de commande de courant, et du signal de forme d'onde de courant cible.

3. Dispositif onduleur décrit dans la revendication 1, comprenant en outre :
un moyen de détection de phase de tension (12) qui détecte un signal de phase de tension représentant la phase de la tension lisse.

4. Dispositif onduleur décrit dans la revendication 3, dans lequel ledit moyen de génération de commande de courant (8) génère le signal de commande de courant sur la base du signal de phase de tension.

5. Dispositif onduleur décrit dans la revendication 3, dans lequel ledit moyen de correction de commande de tension (11) génère le signal de correction de commande de tension sur la base du signal de phase de tension.

6. Dispositif onduleur décrit dans la revendication 1, dans lequel :
ledit moyen de correction de commande de tension (11)
comporte une unité de commande (43) qui génère un signal de période de correction représentant soit une période de correction de longueur nulle ou une période de correction de longueur non nulle dans chaque période de tension lisse ; et
génère un signal de correction de commande de tension lorsque le signal de période de correction est dans la période de correction non nulle ; et
l'unité de commande (43) règle au moins l'un des points de début et de fin dans la période de correction non nulle à un moment souhaité dans chaque période de tension lisse.

7. Dispositif onduleur décrit dans la revendication 1, dans lequel :
ledit moyen de correction de commande de tension (11) change au moins l'une de l'amplitude et de la phase du signal de correction de commande de tension.

8. Dispositif onduleur décrit dans la revendication 1, dans lequel :
ledit moyen de lissage (3) comporte un condensateur de lissage et une bobine de réactance ; et
la fréquence de résonance du condensateur de lissage et de la bobine de réactance est au moins quarante fois la fréquence de l'alimentation en courant alternatif.

9. Dispositif onduleur décrit dans la revendication 8, dans lequel :
le condensateur de lissage est un condensateur à film.

10. Dispositif de conditionnement d'air comprenant :
le dispositif onduleur décrit dans la revendication 1 ; et
un compresseur comportant un moteur (5).
